# EUROPEAN PATENT APPLICATION

(11) **EP 2 662 785 A2**
(43) Date of publication of application: **13.11.2013**
(21) Application number: 13157286.9
(22) Date of filing: 28.02.2013
(51) Int. Cl.: G06F 17/30

(54) **A method and system for non-ephemeral search**

(30) Priority: 28.02.2012 IN CH07342012
(71) Applicant: Samsung Electronics Co., Ltd, Gyeonggi-do 443-742 (KR)
(72) Inventor: Sharma, Ochintya, 560093 Bangalore (IN); Jamadagni, Satish Nanjunda Swamy, 560093 Bangalore (IN)
(74) Representative: Grünecker, Kinkeldey, Stockmair & Schwanhäusser

(57) **Abstract**

A method and a system for providing a non-ephemeral search to a user are provided. When a user query is received, then a content notification request is launched to web pages that are specific to the user query. Subsequently, search results are provided to the user when the content specific to the user query is available in these web pages.

## Description

### BACKGROUND OF THE INVENTION

### 1. Field of the Invention:

The present invention relates to a method for improving internet search results. More particularly, the present invention relates to a method and a system for providing a non-ephemeral search.

### 2. Description of the Related Art:

The computing industry has seen many advances in recent years, and such advances have produced a multitude of products and services. Internet websites are examples of products and services, which are created to give users access to particular types of services, data or searching capabilities. Online content providers are increasingly moving towards building World Wide Web (WWW) sites which are more reliant on a dynamic and frequently-updated content. Content continues to be made available more and more through online auction sites, stock market information sites, news and weather sites, or any other such site whose information changes on a frequent basis, oftentimes daily.

Typically, major search engines, which enable Internet users to search for information on the World Wide Web, create search databases of information which rely on pages being static instead of dynamic. Search engines provide a powerful source of indexed documents from the Internet (or an intranet) that can be rapidly scanned in response to a search query submitted by a user. Such a query is usually very short (on average about two to three words). As the number of documents accessible through the Internet grows, the number of documents that match the query may also increase. However, not every document matching the query is equally important from the user's perspective. As a result, a user is easily overwhelmed by an enormous number of documents returned by a search engine, if the search engine does not order the search results based on their relevance to the user's query.

Especially, it is difficult for naive users to discover informative pages by popular web search engines, since they may not have the domain knowledge about the status of web systems. Various methods for selecting and sorting search results have been used in web search engines of the related art. The simplest methods are based on an exact or almost exact textual matching of information items stored in the search engine data store to the terms of the user's query.

In search engines of the related art, users enter a search query into the search engine, and the query is transmitted to the search engine. The search engine compares the user's search terms to its database and selects results to transmit to the user. The user reviews the results and may take any number of actions, such as visiting a location associated with a search result by clicking on a hyperlink in the results to view a web page associated with a search result. In addition, the search engines of the related art support temporal search which provides the results at the time of data publication.As searching becomes more common, the search engine needs to support different types of searches for supporting different types of users.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and a system for a non-ephemeral search.

Another aspect of the present invention is to provide a method for establishing a search to be resident at a search agent which indexes data sites for possible future content availability.

In accordance with an aspect of the present invention, a method for providing a non-ephemeral search to a user is provided. The method includes receiving a user query, launching a content notification request to web pages that are specific to the user query, and providing search results to the user, when the content specific to the user query is available in the web pages.

In accordance with an aspect of the present invention, a system for providing a non-ephemeral search to a user is provided. The system includes at least one agent and at least one database, an integrated circuit comprising at least one processor, and at least one memory having a computer program code within the integrated circuit, wherein the at least one memory having a computer program code and the at least one processor cause the at least one agent of the system to receive a user query, launch a content notification request to web pages that are specific to the user query, and provide search results to the user, when the content specific to the user query is available in the web pages.

In accordance with an aspect of the present invention, a computer program product for providing a non-ephemeral search to a user is provided. The product includes an integrated circuit comprising at least one processor, and at least one memory having a computer program code within the integrated circuit, wherein the at least one memory having a computer program code and the at least one processor receive a user query, launch a content notification request to web pages that are specific to the user query, and provide search results to the user, when the content specific to the user query is available in the web pages.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a search engine according to the related art;

FIG. 2 illustrates a method of indexing by a search engine according to the related art;

FIG. 3 illustrates a method of querying a search engine according to the related art;

FIG. 4 illustrates a search mechanism according to an exemplary embodiment of the present invention;

FIG. 5 illustrates a search system according to an exemplary embodiment of the present invention;

FIG. 6 illustrates a content identification method for supporting a search according to an exemplary embodiment of the present invention;

FIG. 7 illustrates a flowchart of various steps involved in a search mechanism according to an exemplary embodiment of the present invention; and

FIG. 8 illustrates a computing environment for implementing a search mechanism according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments herein provide a method and a system for providing a non-ephemeral search to a user. According to embodiments of the present invention described herein, a search agent for supporting a search is provided. Initially, the user launches a query, wherein the search agent holds the query for a certain interval of time and provides the search results to the user when the information related to the query is available.

Once the query is posted by the user, the search agent holds the query until the user terminates the query. The search agent divides the query into multiple sub-queries and initiates a web search for the sub-queries. The sub-queries may be biased by the user's context associated with the query.

For supporting the search, the search agent generates context sensitive crawlers that search for a specific content. Furthermore, the crawlers identify an initial search result in terms of the Uniform Resource Locator (URL) pages. The search agent ranks and provides indexes to these pages based on the expected content that might become available in the indexed pages. The user context bias is applied on the index. Once an index that is specific to the user's query is created, the agent launches the query related notification request to the shortlisted web or other data pages. This allows the search agent to know when the specific content is available so that a user query result could be posted to the user.

In an exemplary embodiment of the present invention, the context associated with the user query comprises user identity, query search strings, filters, metadata, and the like.

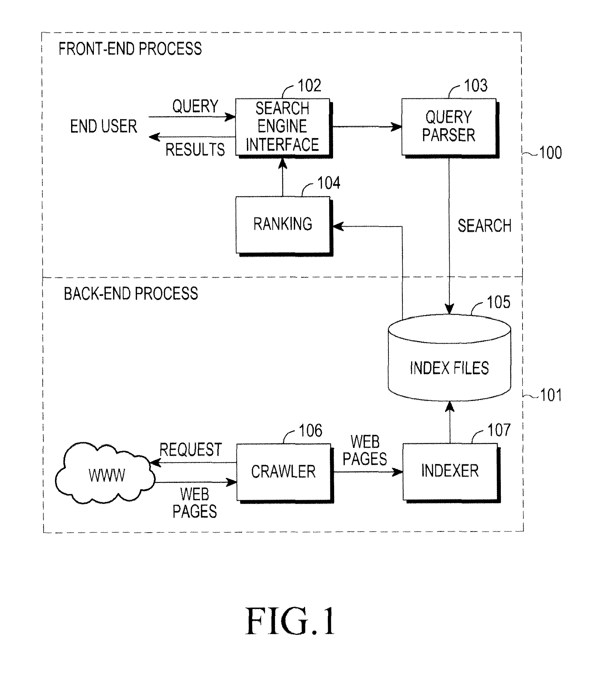

FIG. 1 illustrates a search engine according to the related art.

Referring to FIG. 1, a typical search engine includes a front end and a back end processes. In the front end process 100, a user visiting a typical search service enters terms in a search form. Once the user enters the search terms, a request is sent to the search engine interface 102. The search engine interface 102 sends these terms to a query parser 103. The query parser 103searches the index files 105 for obtaining a match for the query terms entered by the user.

In an example, the search engine compares the requested term with the entries in index files 105. If the requested term matches an entry, the search engine returns the associated pointers. These pointers are usually a list of search results.

Furthermore, if the search engine finds multiple pointers (e.g., URLs) associated with the requested term, the search engine ranks these pointers according to various algorithms by ranking module 104.

In the back end process 101, web search engines work by storing information about many web pages. These pages are retrieved by a web crawler (also known as a spider) 106, an automated web browser which follows every link on the site. The contents of each page are analyzed to determine how it should be indexed (for example, words can be extracted from the titles, page content, headings, or special fields called metatags). Data about web pages are stored in an index database 105 for use in later queries through indexer 107. A query can be a single word. The purpose of an index is to allow information to be found as quickly as possible.

When a user enters a query into a search engine (typically by using keywords), the search engine examines its index and provides a listing of best-matching web pages according to its criteria, usually with a short summary containing the document's title and sometimes parts of the text. The index is built from the information stored with the data.

While there may be millions of web pages that include a particular word or a phrase, some pages may be more relevant, popular, or authoritative than others. Most search engines employ methods to rank the results to provide the best results first.

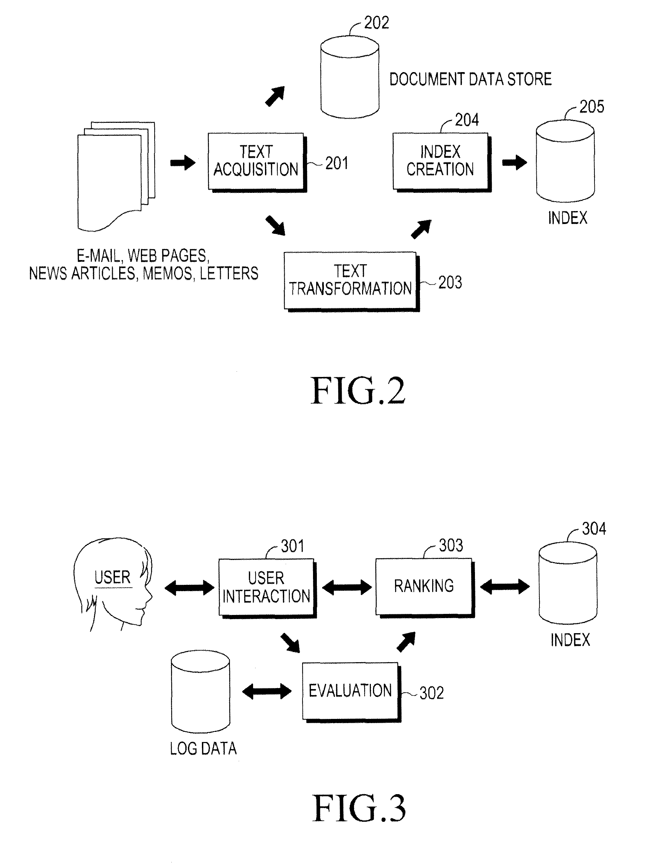

FIG. 2 illustrates a method of indexing by a search engine according to the related art.

Referring to FIG. 2, the search engine indexing process involves collecting detailed information about available web pages and analyzing the information. The text acquisition 201 identifies and stores the documents for indexing and web crawlers follow links to find the documents. Furthermore, the text acquisition 201 is used for converting a variety of documents into a consistent text plus metadata format. The documents can be a HyperText Markup Language (HTML), eXtensible Markup Language (XML), Word, PDF, and the like.

The document data store 202 is a place where text, metadata, and other related content for the documents is stored. The metadata represents the information about document type and creation date. The other related content comprises links, anchor text, and the like.

The document data store 202 provides fast access to the document contents for the search engine components. Furthermore, the document data store 202 provides fast access to document contents for search engine components (for example, generating a result list).

The text transformation 203 transforms the documents into index terms or features. Text transformation 203 comprises a parser for processing the sequence of text tokens in the document to recognize structural elements like titles, headings, and the like.

Index creation 204 helps in providing indexes to the content and obtains the counts and positions of words and other features. In addition, index creation 204 computes weights for index terms. The index files 205 are created by text acquisition 201 from multiple sources like World Wide Web (WWW) pages followed by the identification and storing documents for indexing. This is followed by Text transformation 203 that transforms documents into index terms or features and finally Index creation 204 where index terms are used to create data structures (indexes) to support fast searching.

FIG. 3 illustrates a method of querying a search engine according to the related art.

Referring to FIG. 3, a user enters a query into the search engine using a user interaction module 301. The user interaction module 301 provides a user interface and a parser for query language. Furthermore, the user interaction module 301 transforms the query of the user.

In an example, the user interaction module 301 may perform spell checking and query suggestion provides alternatives to an original query. Furthermore, the user interaction module 301 provides a display of ranked documents for a query. A user's query is evaluated using an evaluation module 302 as shown in FIG. 3 for obtaining the best match.

When a user enters a query into a search engine (typically by using keywords), the engine examines its index and provides a listing of best-matching web pages according to its criteria, usually with a short summary containing the document's title and sometimes parts of the text. The index 304 is built from the information stored with the data and the method by which the information is indexed. An index table 304 is searched by the search engine for obtaining the results. If the user's query matches more than one result in the index table 304, the search engine ranks the results using the ranking module 303 and provides the best results first to the user.

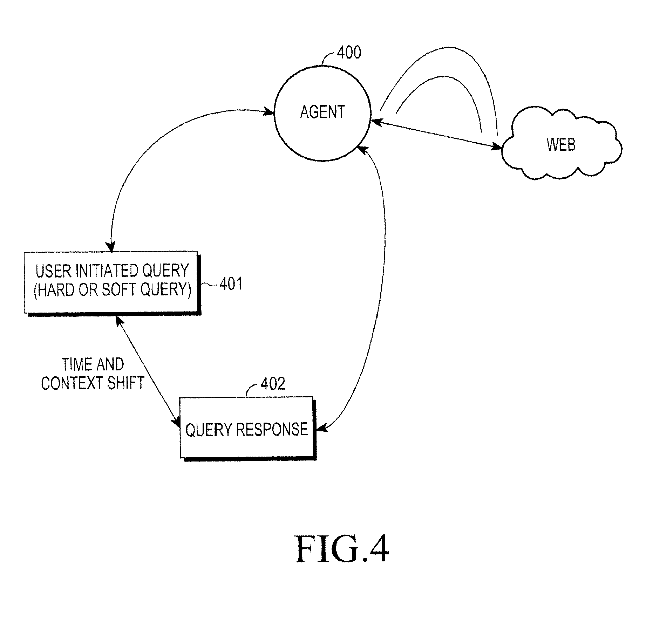

FIG. 4 illustrates a search mechanism according to an exemplary embodiment of the present invention.

Referring to FIG. 4, the search mechanism disclosed herein involves a user for initiating a search that is posted in an agent 400. In an exemplary embodiment of the present invention, the agent 400 can be a third party hosted server or it can be a server entity in a telecommunication service provider network. As depicted in FIG. 4, the user initiates a query process 401, which is received by the agent 400. Once a search query is posted by the user in the agent 400, the agent 400 holds the query up to the time the user terminates the query. Furthermore, the agent 400 divides the initial query into multiple sub-queries and initiates a web search for the individual sub-queries.

In an exemplary embodiment, the individual sub-queries may be biased by the user's context associated with the sub-query.

Furthermore, the agent 400 generates context sensitive crawlers that search for the specific content. The query or search scheme also consists of an associated "context" and "user identity" entities.

The context aspect associated with the user query comprises the parameters, such as user identity, query search strings, filters, and metadata, and the like.

Furthermore, the user identity associated with the query comprises one or more identity elements that facilitate posting the query response to the query owner.

In an exemplary embodiment of the present invention, the identity formats of the user comprise an e-mail IDentification (ID), a phone number, an Internet Protocol (IP) address, and the like.

The agent 400 posts the query response 402 to the user, once the content becomes available within the web. In an exemplary embodiment of the present invention, posting the query response to the user involves sending the requested content to the user by using the identity elements of the user, upon detecting that the content requested by the user is available.

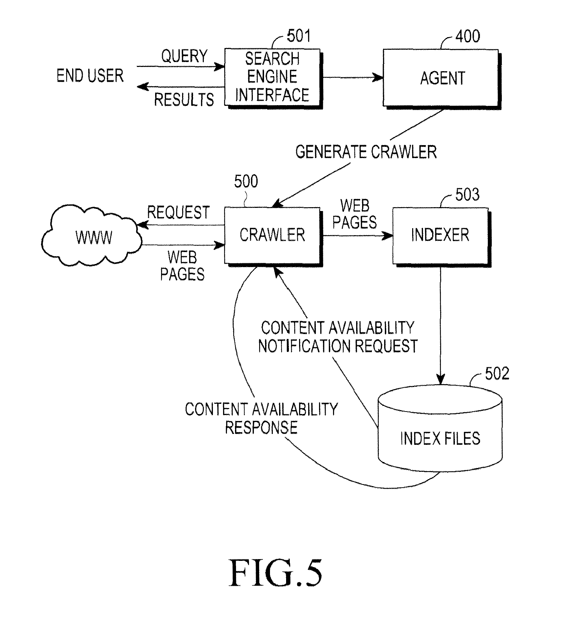

FIG. 5 illustrates a search system according to an exemplary embodiment of the present invention.

Referring to FIG. 5, the search system includes the agent 400, a crawler 500, a search engine interface 501, an index files 502, and an indexer 503. Furthermore, the agent 400 includes a query parser. For supporting a search query, the crawlers 500 will wait for such user specific content to become available. In an exemplary embodiment of the present invention, based on the user query, the crawlers 500 identify the links that provide the information needed by the user. The search engine generates new crawlers for searching the identified set of sites.

In an exemplary embodiment of the present invention, the search engine provides the user with a set of instantaneous results based on the user query. The user identifies a group of links or sites or web pages that are related to his/her requirement. Thereafter, the search engine generates new crawlers for searching and reporting from the identified set for the user information as it becomes available.

In an exemplary embodiment of the present invention, the search mechanism disclosed herein includes a method where a user launches a query with a specified date and/or time in which the query needs to be executed. The agent 400 executes the user's query on the specified time and date and provides the set of results to the user.

In an exemplary embodiment of the present invention, the search mechanism disclosed herein involves a method where a user launches a query and the agent 400 holds the query for a period of time. The agent 400 provides the results in specified intervals to the user.

The agent 400 generates context sensitive crawlers 500 that search for a specific content. Initially, the crawler 500 obtains a list of URLs to visit and store. The crawler 500 only visits these URLs and obtains copies which it stores, or forwards to the search engine for indexing and ranking according to various aspects.

In the search mechanism, the crawler 500 generated by the agent 400 identifies an initial search result in terms of the URL pages. The agent 400 ranks and provides indexes to these pages based on the expected content that might become available in the indexed pages. Furthermore, a user context bias is applied on the index. Once a user query specific index is created, the agent 400 launches the query specific content notification request to the identified web pages or other data pages. This allows the agent 400 to know when a specific content becomes available so that a user query result could be posted to the user.

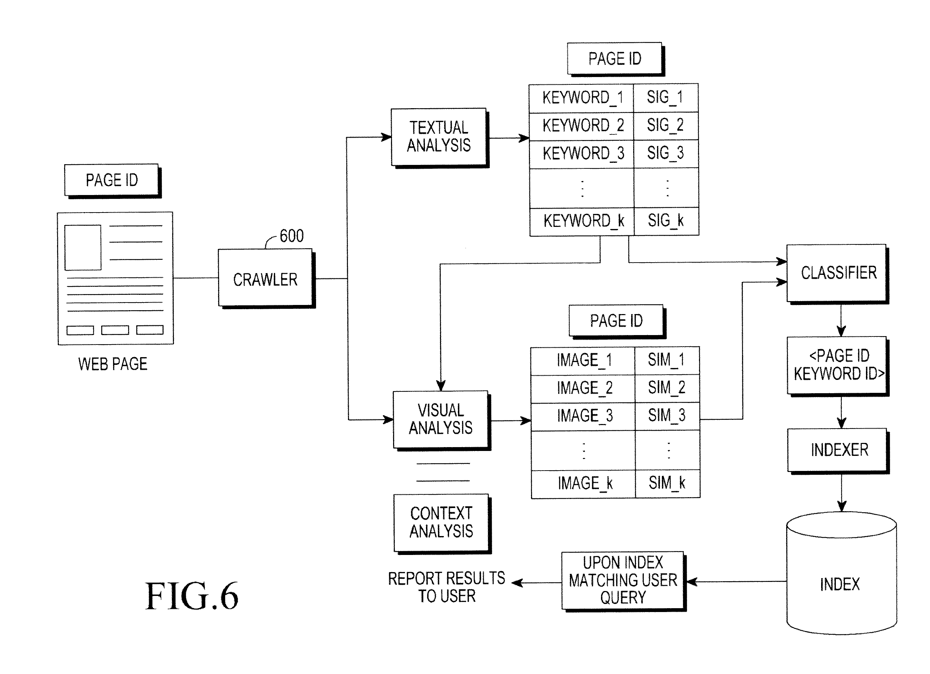

FIG. 6 illustrates a content identification method for supporting a search according to an exemplary embodiment of the present invention.

Referring to FIG. 6, the search mechanism described herein identifies, classifies, and indexes the web pages or websites, in which the relevant information is available, through textual analysis, visual analysis, and context analysis. According to embodiments of the present invention described herein, focused crawlers to track such web pages or websites for content specific information is generated.

In an exemplary embodiment of the present invention, a focused crawler is an agent that targets a particular topic and visits the particular topic for obtaining the relevant web segment without wasting resources on irrelevant material.

According to embodiments of the present invention disclosed herein, a focused crawler designed to obtain the first set of relevant web pages or sites or links is generated. When the user refines a group of link or web pages based on his/her context, the focused crawler tracks only these links or web pages refined by the user until the context specific data appears on the web pages.

During the initial query stage, search keywords and/or starting web pages are provided as an input to crawlers 600. The crawlers 600 extract the outgoing links appearing in the starting web pages and determine which links to visit next based on a certain criteria.

The web pages pointed to these links are downloaded and those links satisfying certain relevance criteria are stored in a local repository. The crawlers 600 continue visiting web pages until a desired number of pages have been downloaded or until local resources (for example, a storage) are exhausted. The crawlers 600 will bias the search with relevant user context.

In an exemplary embodiment of the present invention, the user may initiate a search for schools and indicate the notification or reporting criteria as admission form availability on the web pages. The crawlers 600 searches for all schools in a location and obtains the links, but the search criteria being "availability of admission forms" the crawlers 600 comes back to the user only after the admission forms become available on the links and provides the results to the user.

In an exemplary embodiment of the present invention, the crawlers 600 is used in conjunction with a context engine. The context engine provides the relevant context for a focused search. In an exemplary embodiment of the present invention, when a user belonging to Mumbai is searching a lot on Bangalore, it may indicate that the user may be planning to move to Bangalore. In this context, a search for school admissions may result in a search for Bangalore schools instead of schools in Mumbai.

When the user enters an initial query, the search engine provides an initial set of links or relevant results based on the query. From the initial set of links, the user selects and searches only a few links. These few links searched by the user are tracked by the crawlers 600 for textual changes. Upon index matching to the user query, search results are reported to the user. That is, when the crawlers 600 identify the changes to those links, the changes are notified to the user through the identity information provided by the user.

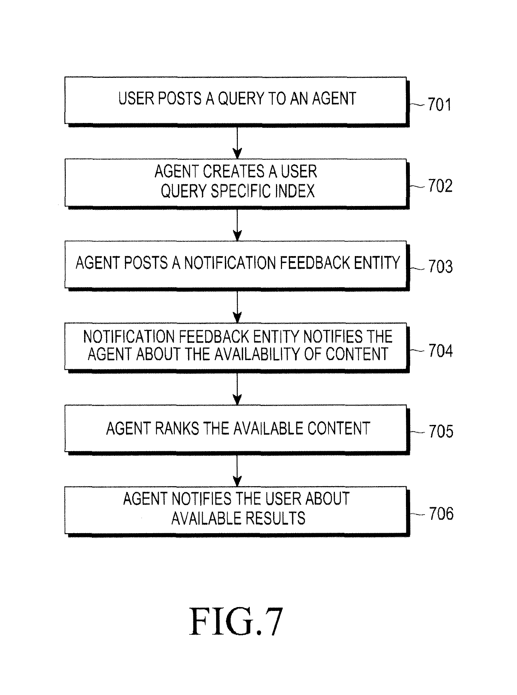

FIG. 7 illustrates a flowchart of various steps involved in a search mechanism according to an exemplary embodiment of the present invention.

Referring to FIG. 7, a user posts a query to an agent 400 in step 701. The agent 400 receives the query and holds the query until the user terminates the query. In step 702, the agent 400 creates an index, which is specific to the user's query for possible future content available in the indexed sites. In step 703, the agent 400 posts a content notification request to a notification feedback entity for the sites indexed by the index. Once the user specific content is available in the indexed sites, the notification feedback entity notifies the agent 400 about the availability of the content requested by the user in step 704.

In step 705, upon receiving the available content, the agent 400 ranks the available content. Finally, the agent 400 notifies the user about the available results in step 706. In an exemplary embodiment of the present invention, the agent notifies the available results to the user by using the contact information provided by the user at the time of querying the search engine.

The contact information provided by the user at the time of querying the search engine comprises an e-mail ID, a contact number, an IP address, and the like.

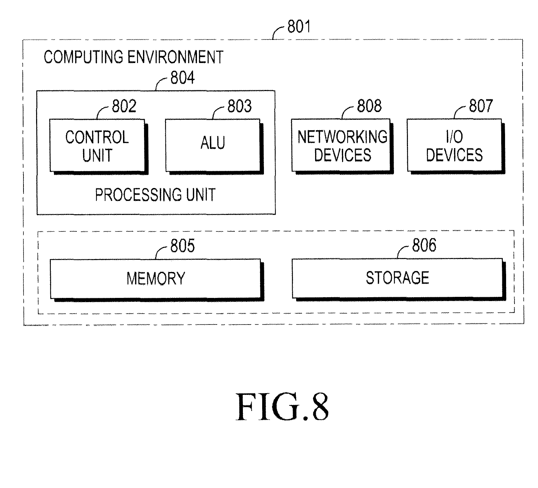

FIG. 8 illustrates a computing environment for implementing a search mechanism according to an exemplary embodiment of the present invention.

Referring to FIG. 8, as depicted the computing environment 801 comprises at least one processing unit 804 that is equipped with a control unit 802 and an Arithmetic Logic Unit (ALU) 803, a memory 805, a storage 806, plurality of networking devices 808 and a plurality of Input/Output (I/O) devices 807. The processing unit 804 is responsible for processing the instructions of the algorithm. The processing unit 804 performs its processing according to commands from the control unit 802. Further, any logical and arithmetic operations involved in the execution of the instructions are computed with the help of the ALU 803.

The overall computing environment 801 may include multiple homogeneous and/or heterogeneous cores, multiple Central Processing Units (CPUs) of different kinds, special media and other accelerators. The processing unit 804 is responsible for processing the instructions of the algorithm. Furthermore, the processing unit 804 may be located on a single chip or over multiple chips.

The algorithm comprising instructions and codes required for the implementation are stored in the memory 805, the storage 806, or both. At the time of execution, the instructions may be fetched from the corresponding memory 805 and/or storage 806, and executed by the processing unit 804.

In hardware implementations, various networking devices 808 or external I/O devices 807 may be connected to the computing environment to support the implementation through the networking unit and the I/O device unit.

The embodiments of the present invention can be implemented through at least one software program running on at least one hardware device and performing network management functions to control the elements. The elements shown in FIG. 8 include blocks which can be at least one of a hardware device, or a combination of a hardware device and a software module.

Also, the embodiments of the present invention may be implemented in either a terminal or a server. When the present invention is implemented in a server, the server performs a non-ephemeral search according to a user query received from a terminal, and provides search results to a user through the terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for providing a non-ephemeral search to a user, the method comprising:
receiving a user query;
launching a content notification request to web pages that are specific to the user query; and
providing search results to the user, when the content specific to the user query is available in the web pages.

2. The method of claim 1, wherein launching the content notification request comprises:
generating, by an agent, context sensitive crawlers for identifying initial search results provided by a search engine;
creating, by the agent, an index that is specific to the user query after ranking the identified search results; and
launching, by the agent, the content notification request, which is specific to the user query, to web pages indexed by the index.

3. The method of claim 2, further comprising:
searching the user query based on a context associated with the user query, wherein the context is applied on the index created by the agent.

4. The method of claim 3, wherein the context associated with the user query comprises at least one of a user identity, query search strings, filters, and metadata.

5. The method of claim 4, wherein the user identity comprises at least one of an e-mail IDentification (ID), a contact number, and an Internet Protocol (IP) address of the user, wherein the agent provides the search results specific to the user query using the user identity.

6. The method of claim 2, further comprising:
dividing, by the agent, the user query into a plurality of sub-queries, wherein the agent initiates a search for sub-queries based on the context associated with the user query.

7. The method of claim 2, further comprising:
receiving, by the agent, a content availability notification request, in response to the content notification request, wherein the agent provides search results specific to the user query upon receiving the content availability notification request.

8. The method of claim 2, wherein the context sensitive crawlers track the identified search results for performing textual analysis within the identified search results for providing the user query results.

9. A system for providing a non-ephemeral search to a user, the system comprising:
at least one agent and at least one database;
an integrated circuit comprising at least one processor; and
at least one memory having a computer program code within the integrated circuit,
wherein the at least one memory having the computer program code and the at least one processor cause the at least one agent of the system to:
receive a user query;
launch a content notification request to web pages that are specific to the user query; and
provide search results to the user, when the content specific to the user query is available in the web pages.

10. The system of claim 9, wherein the at least one memory and the at least one processor cause the at least one agent to:
generate context sensitive crawlers for identifying initial search results provided by a search engine;
create an index that is specific to the user query after ranking the identified search results; and
launch the content notification request, which is specific to the user query, to web pages indexed by the index.

11. A computer program product for providing a non-ephemeral search to a user, the product comprising:
an integrated circuit comprising at least one processor; and
at least one memory having a computer program code within the integrated circuit,
wherein the at least one memory having the computer program code and the at least one processor cause an agent of the product to:
receive a user query;
launch a content notification request to web pages that are specific to the user query; and
provide search results to the user, when the content specific to the user query is available in the web pages.

12. The product of claim 11, wherein the at least one memory and the at least one processor cause the at least one agent to:
generate context sensitive crawlers for identifying initial search results provided by a search engine;
create an index that is specific to the user query after ranking the identified search results; and
launch the content notification request, which is specific to the user query, to web pages indexed by the index.

13. The product of claim 11, wherein the product is further configured to search the user query based on a context associated with the user query, wherein the context is applied on the index created by the agent.

14. The product of claim 13, wherein the context associated with the user query comprises at least one of a user identity, query search strings, filters, and metadata.

15. The product of claim 14, wherein the user identity comprises at least one of an e-mail IDentification (ID), a contact number, and an Internet Protocol (IP) address of the user, wherein the agent provides the search results specific to the user query using the at least one user identity.

16. The product of claim 12, wherein the agent is configured to divide the user query into a plurality of sub-queries, and wherein the agent is further configured to initiate a search for sub-queries based on the context associated with the user query.

17. The product of claim 12, wherein the agent is configured to receive a content availability notification request, in response to the content notification request, wherein the agent provides search results specific to the user query upon receiving the content availability notification request.

18. The product of claim 12, wherein the context sensitive crawlers are configured to track the identified search results for performing textual analysis within the identified search results for providing the user query results.
